# EUROPEAN PATENT SPECIFICATION

(11) **EP 4 634 111 B1**
(45) Date of publication and mention of the grant of the patent: **25.11.2026**
(21) Application number: 23828426.9
(22) Date of filing: 08.12.2023
(51) Int. Cl.: C01B 3/382, C01B 3/48, C01B 3/50

(54) **DECARBONISATION OF A CHEMICAL PLANT**
ENTKARBONISIERUNG EINER CHEMISCHEN ANLAGE
DÉCARBONISATION D'UNE INSTALLATION CHIMIQUE

(30) Priority: 15.12.2022 EP 22213971
(43) Date of publication of application: 22.10.2025
(73) Proprietor: Honeywell CT UK Limited, Billingham TS23 1LH (GB)
(72) Inventor: CASSIDY, Paul John, London W2 6LG (GB); CHRISTIE, Robert, London W2 6LG (GB); EVANS, Phillip David, Stockton-On- Tees Cleveland TS17 6PY (GB); ROBERTS, Iain James Olson, Stockton-On- Tees Cleveland TS17 6PY (GB); YORATH, Neil David, London W2 6LG (GB)
(74) Representative: Honeywell CT
(86) International application number: PCT/GB2023/053164
(87) International publication number: WO 2024/126981

(56) References cited:
- US-A1- 2008 132 588
- US-A1- 2011 042 620
- US-A1- 2011 098 367
- US-A1- 2021 017 023

## Description

### Technical field

The present invention relates to a method for reducing the carbon dioxide emissions of a chemical plant.

### Background art

Numerous chemical processes involve a step in which hydrocarbon-containing impurities are removed from the reaction system or desired product via a purge or a purification unit. This hydrocarbon-containing stream is often referred to as "off-gas", "fuel gas" or "purge gas". Important, non-limiting examples of this are in the production of hydrogen, methanol and ammonia; production of these chemicals industrially involves steam reforming of a hydrocarbon fuel to produce a synthesis gas which is then processed in downstream steps. Unwanted hydrocarbons (predominantly methane) are removed via a reaction loop purge or via a purification unit as an off-gas. Normally the off-gas is combusted in one or more fired heaters as fuel for use elsewhere on the chemical plant. The CO₂ produced through burning the off-gas is not normally captured because it is at relatively low pressure. This CO₂ is therefore released to the atmosphere (sometimes referred to as flue gas) and contributes to the CO₂ emissions of the chemical plant.

WO2022/003312A1 (Johnson Matthey) describes a process for the production of hydrogen which involves: (i) steam reforming of a mixture comprising a hydrocarbon and steam at a carbon ratio of at least 2.6 : 1 in a gas-heated reformer followed by autothermal reforming; (ii) water-gas shift; (iii) condensation of water; (iv) carbon dioxide separation; and (v) purification to separate a purified hydrogen gas and a fuel gas. The fuel gas is fed, as the sole fuel, to one or more fired heaters used to heat one or more process streams within the process. This process is capable of a CO₂ capture of 97% or higher.

WO2022/003313A1 (Johnson Matthey) describes a similar concept to WO2022/003312A1 but instead of step (i) as described above the process involves subjecting a gaseous mixture comprising hydrocarbon and steam having a steam to carbon ratio of at least 0.9 : 1 to adiabatic pre-reforming in a pre-reformer followed by autothermal reforming in an autothermal reformer (ATR). This process is capable of a CO₂ capture of 95% or higher.

WO2022/003312A1 and WO2022/003313A1 describe arrangements which are well suited to new build "grassroots" hydrogen plants. For the avoidance of doubt, a "hydrogen plant" is a chemical plant in which H₂ is the desired product, as opposed to simply an intermediate as is the case in a methanol plant or an ammonia plant. However, because the capex of a grassroots chemical plant is high, there is a need for solutions which decarbonise existing chemical plants.

One solution is to increase the yield of hydrogen of an existing process and use a portion of this hydrogen as fuel instead of the hydrocarbon-containing off-gas. For example WO2011/046680A1 (Praxair Technology Inc.) discloses a method and apparatus for producing a hydrogen containing product in which hydrocarbon containing feed gas streams are reacted in a steam methane reformer of an existing hydrogen plant and a catalytic reactor that reacts hydrocarbons, oxygen and steam. The catalytic reactor is retrofitted to the existing hydrogen plant to increase hydrogen production. The resulting synthesis gas streams are combined, cooled, subjected to water-gas shift and then introduced into a production apparatus that can be a pressure swing adsorption unit. The amount of synthesis gas contained in a shifted stream made available to the production apparatus is increased by virtue of the combination of the synthesis gas streams to increase production of the hydrogen containing product. The catalytic reactor is operated such that the synthesis gas stream produced by such reactor is similar to that produced by the steam methane reformer and at a temperature that will reduce oxygen consumption within the catalytic reactor.

The above described retrofit process involves adding a catalytic reactor into the main steam reforming section. This necessarily involves disrupting the main reforming section requiring plant downtime and is complex and expensive. Furthermore, whilst this retrofitting method may increase hydrogen production, it does provide for reduced carbon dioxide emissions and more efficient carbon capture.

The present invention provides an alternative solution to reducing the CO₂ emissions of a chemical plant and is applicable to a wide range of chemical plants where an off-gas is currently combusted as fuel.

### Summary of the invention

The present inventors have realised that the above problems can be solved by retrofitting the chemical plant by installing an off-gas treatment unit (OTU). The role of the OTU is to convert as much of the hydrocarbon in the off-gas as possible into H₂ and CO₂. The CO₂ is then largely removed and the H₂ is then combusted as fuel in place of the off-gas. The OTU of the present invention includes, in series, (i) an autothermal reformer (ATR); (ii) a water-gas shift (WGS) section; and (iii) a CO₂ removal unit.

The term "chemical plant" as used herein should be understood in broad terms as the area which includes the process in question, which is to be decarbonised (in the case of the retrofit method), together with associated downstream and upstream processes. As a non-limiting example, the chemical plant may be an oil refinery.

When applied to the decarbonisation of chemical plants containing a reforming section, as is found in many hydrogen, methanol and ammonia plants, the option of fitting the OTU outside of the main reforming section offers several benefits. Firstly, it does not involve disrupting the main reforming section which is complex, expensive and requires plant downtime. Secondly, a single OTU can be used for the processing of several different off-gas stream from different locations throughout the plant. This option is therefore particularly attractive for a chemical plant or chemical manufacturing site, e.g. an oil refinery, where there are several different hydrocarbon-containing off-gas streams which are used for fuel.

This solution is different from the solution in WO2011/046680A1 where a catalytic reactor is retrofitted directly between the steam methane reformer and the WGS section in the main reforming section. In the prior art arrangement, off-gases from elsewhere cannot easily be sent to the ATR. The present invention offers the advantage that, by having a dedicated OTU, it is possible to send hydrocarbon-containing off-gas streams from multiple different sources throughout the chemical plant for treatment, and generate a decarbonised fuel stream for fired equipment. For the avoidance of doubt, the decarbonised fuel stream may contain residual hydrocarbons, but has a lower hydrocarbon content than the fuel stream autothermal reformer.

In a first aspect the invention relates to a method for retrofitting a chemical plant which is initially arranged such that a hydrocarbon-containing off-gas stream is combusted to provide at least some of the heating duty on the chemical plant, the method comprising the step of:
installing an off-gas treatment unit arranged to accept said hydrocarbon-containing off-gas stream, the off-gas treatment unit comprising sequentially:
   (i) an autothermal reformer, arranged to accept a hydrocarbon-containing fuel stream comprising hydrocarbons and steam and produce a reformed gas stream;
   (ii) a water-gas shift section arranged to accept said reformed gas stream and produce a shifted gas stream; and
   (iii) a CO₂ removal unit arranged to accept said shifted gas stream and produce a CO₂ rich stream and a decarbonised fuel stream;
wherein said hydrocarbon-containing fuel stream is derived from said hydrocarbon-containing off-gas stream, steam and any supplemental fuel;
wherein said off-gas treatment unit is arranged such that the decarbonised fuel stream, optionally having first undergone further purification, is combusted instead of the hydrocarbon-containing off-gas stream;
with the proviso that the hydrocarbon-containing off-gas stream is not a purge gas stream from a methanol loop; and
with the proviso that if the hydrocarbon-containing off-gas stream is a tail-gas stream from the purification unit of a hydrocarbon reforming section comprising a fired steam reformer, water-gas shift and purification unit, then the decarbonised fuel stream from the off-gas treatment unit is not sent to the fired steam reformer of the hydrocarbon reforming section as a fuel.

UK patent application GB2206756.5 describes a method for retrofitting a methanol production unit which initially comprises a fired steam reformer and a methanol loop comprising one or more methanol synthesis reactors which are fed with synthesis gas from the hydrocarbon reforming unit. The method involves installing a purge gas treatment unit comprising a partial oxidation reactor or a purge gas reforming unit, a water-gas shift section and tail gas carbon dioxide removal unit. The purge gas treatment unit is arranged such that a portion of the hydrogen-enriched stream from the carbon dioxide removal unit is fed to the fired steam reformer as fuel. The method of the present invention differs from the method described in GB2206756.5 the above application because of the proviso that the hydrocarbon-containing off-gas stream fed to the off-gas treatment unit is not a purge gas stream from a methanol loop.

UK patent application GB2208800.9 describes a method for retrofitting a hydrogen production unit which initially comprises a fired steam reformer, a synthesis gas water-gas shift unit and a purification unit. The method involves installing a tail gas treatment unit comprising a partial oxidation reactor or a tail gas reforming unit, a tail gas WGS unit and a tail gas carbon dioxide removal unit. The tail-gas treatment unit is arranged such that a portion of the hydrogen-enriched tail gas from the tail gas carbon dioxide removal unit is fed to the fired steam reformer as a fuel. Together, the fired steam reformer, synthesis gas WGS unit and purification unit are referred to herein as the hydrocarbon reforming section. The method of the present invention differs from the method described in GB2208800.9 because of the proviso that, if the hydrocarbon-containing off-gas stream is a tail-gas stream from the purification unit of a hydrocarbon reforming section comprising a fired steam reformer, WGS and purification unit, then the decarbonised fuel stream from the off-gas treatment unit is not sent to the fired steam reformer of the hydrocarbon reforming section as a fuel.

US2011/098367A1 describes a method for processing a Fischer-Tropsch (FT) off-gas comprising the steps of (i) conversion of a hydrocarbonaceous feed to obtain synthesis gas, (ii) catalytic conversion of the synthesis gas using a FT catalyst, (iii) separating the product of step (ii) into at least one hydrocarbon product stream and a FT off-gas; (iv) treating the FT off-gas to a water gas shift reaction; (v) subjecting the CO-depleted FT off-gas to carbon dioxide removal. The carbon-dioxide depleted Fischer-Tropsch off-gas generated in step (v) may be combusted for generating energy. In one described embodiment the FT off-gas may be subjected to steam methane reforming prior to step (iv). In the present invention an ATR is used instead of a steam methane reformer to carry out reforming reactions on the hydrocarbon-containing fuel stream. The benefits of using an ATR instead of a steam methane reformer include better energy efficiency, faster start-up times, lower capex and lower footprint.

In some embodiments the hydrocarbon-containing off-gas stream is taken from a purification unit which is part of a steam reforming section. By "steam reforming section" we mean a portion of the chemical plant in which hydrocarbons (typically methane) are converted to hydrogen and carbon oxides. A steam reforming section typically includes a steam methane reformer, one or more WGS stages and a purification unit. Steam reforming sections are found in chemical plants which produce syngas, e.g. chemical plants which produce hydrogen, methanol or ammonia.

In a second aspect the invention relates to a chemical plant comprising an off-gas treatment unit arranged to accept a hydrocarbon-containing off-gas stream, the off-gas treatment unit comprising sequentially:
(i) an autothermal reformer, arranged to accept a hydrocarbon-containing fuel stream comprising hydrocarbons and steam and produce a reformed gas stream;
(ii) a water-gas shift section arranged to accept said reformed gas stream and produce a shifted gas stream; and
(iii) a CO₂ removal unit arranged to accept said shifted gas stream and produce a CO₂ rich stream and a decarbonised fuel stream;

wherein said hydrocarbon-containing fuel stream is derived from said hydrocarbon-containing off-gas stream, steam and any supplemental fuel;
wherein the chemical plant is arranged such that the decarbonised fuel stream, optionally having first undergone further purification, is combusted to provide at least some of the heating duty on the chemical plant;
with the proviso that the hydrocarbon-containing off-gas stream is not a purge gas stream from a methanol loop; and
with the proviso that if the hydrocarbon-containing off-gas stream is a tail-gas stream from the purification unit of a hydrocarbon reforming section comprising a fired steam reformer, water-gas shift and purification unit, then the decarbonised fuel stream from the off-gas treatment unit is not sent to the fired steam reformer of the hydrocarbon reforming section as a fuel.

Whilst arrangements according to the second aspect can be prepared by the retrofit method, the arrangement according to the second aspect may also be useful for grassroots chemical plants.

In a third aspect the invention relates to a process of treating a hydrocarbon-containing off-gas stream from a chemical plant by converting said hydrocarbon-containing off-gas stream in an off-gas treatment unit to produce a decarbonised fuel stream and combusting said decarbonised fuel stream to provide at least some of the heating duty on said chemical plant, wherein the chemical plant, wherein the chemical plant is as defined in the second aspect.

### Description of the Figures

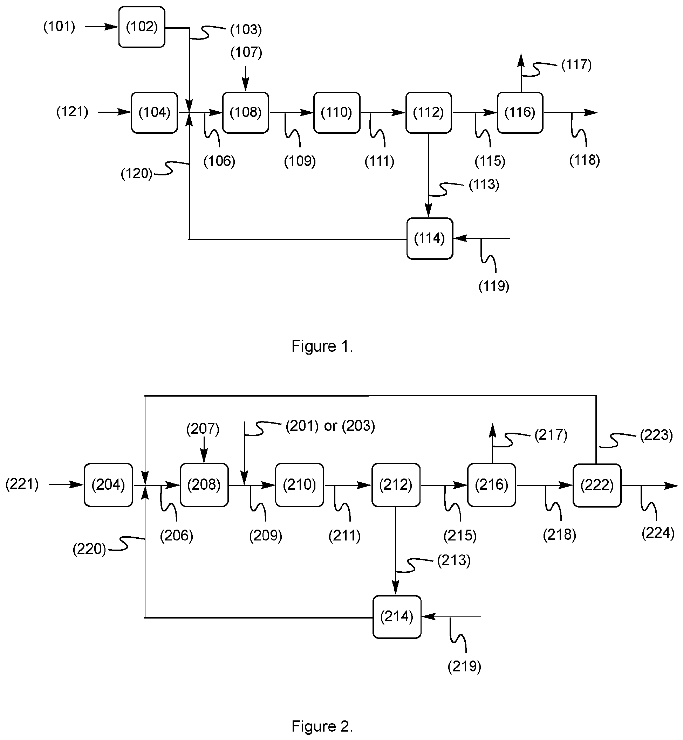

Figure 1 is an illustration of an off-gas treatment unit according to the present invention. An off-gas stream (101) or a purified off-gas (103) optionally having first undergone treatment in a purification unit (102), is combined with steam (120) to generate a hydrocarbon-containing fuel stream (106) which is fed to an autothermal reformer (108). In the arrangement modelled in Figure 1 the off-gas was purified by CO₂ removal prior to combination with steam. An oxygen-containing stream (107) is also fed to the autothermal reformer. A reformed gas stream (109) is fed to a water-gas shift section (110) which includes one or more shift units. A shifted gas stream (111) is fed to a cooling and water recovery unit (112) where it is separated into a water stream (113) and a crude H₂ stream (115). The crude H₂ stream is fed to a CO₂ separation unit (116) where it is separated in a CO₂-rich stream (117) and a decarbonised fuel stream (118). The water stream (113), along with make-up water (119) is fed to a steam boiler (114) where it is used to generate steam (120) which is fed back to the process upstream of the autothermal reformer. In some embodiments supplemental fuel (121), typically having first undergone treatment in a purification unit (104), may also be fed to the autothermal reformer. The decarbonised fuel stream (118) is used as fuel in place of the off-gas (101). Combustion of the decarbonised fuel stream is not shown.
Figure 2 is an illustration of another off-gas treatment unit according to the present invention. The reference numerals used in Figure 2 are analogous (101)→(201), (102)→(202) etc... but details of the arrangement and new reference numerals are described below. An off-gas stream (201), having optionally undergone purification in a purification unit (not shown) to produce a purified off-gas (203) is fed downstream from the ATR and upstream from the WGS section (210). The arrangement is analogous to Figure 1 but the decarbonised fuel stream (218) from the CO₂ separation unit (216) is treated in a purification unit (222) to produce a H₂-rich stream (224) and a H₂-lean stream (223) which is fed back to the process upstream of the autothermal reformer in order to convert hydrocarbons present in the H₂-lean stream. The H₂-rich stream (224) is used as fuel in place of the off-gas (201) or the purified off-gas (203). Combustion of the H2-rich stream is not shown. This arrangement is particularly suitable where stream (201) or (203) has a high CO content.

For ease of understanding, the origin of the off-gas stream (101, 201) has not been shown in Figures 1 and 2. However, the claimed invention is subject always to the provisos set out in claim 1.

### Detailed description

Any sub-headings are for convenience only and are not intended to limit the invention.

### Chemical plant

The present invention is applicable to a wide variety of chemical plants in which there is at least one hydrocarbon-containing off-gas stream which is combusted as fuel to provide at least some of the heating duty on the chemical plant.

A hydrocarbon-containing off-gas stream is fed to the OTU. In some embodiments the off-gas stream is a purge stream. The skilled person will be aware that many chemical processes operate as a loop; the product stream from a reactor is treated to separate out a stream containing the desired product and a stream containing unreacted materials which is recycled to the reactor. To avoid inerts building to unacceptably high levels in the loop a portion of the recycle stream is removed (a purge stream). For example, in some embodiments the off-gas stream may be a purge stream from a methanol plant or an ammonia plant.

In a preferred embodiment the off-gas stream is a hydrocarbon-containing stream from a purification unit. In some embodiments the purification unit is a component of a steam reforming section comprising a steam methane reformer (e.g. in a hydrogen, methanol or ammonia plant).

In a preferred embodiment the off-gas stream is a hydrocarbon-containing stream from an ethylene cracker.

### Off-gas treatment unit

The OTU comprises, sequentially, an autothermal reformer, a water-gas shift section, and a CO₂ removal unit. Additional units (e.g. heat exchangers, steam removal etc...) may also be present in the OTU.

The OTU may be arranged to accept a single hydrocarbon-containing off-gas stream or two or more different hydrocarbon-containing off-gas streams. The latter option has the benefit that the OTU can be used to carry out steam reforming, shift and CO₂ removal on multiple different streams from across the chemical plant. Where the OTU is fed by two or more hydrocarbon-containing off-gas streams, the off-gas streams are typically combined into a single stream prior to entering the ATR. For example, the various off-gas streams may be combined in a fuel gas header prior to the ATR.

In some embodiments the OTU is arranged to receive a supplementary fuel in addition to said off-gas stream(s). The energy available from burning the decarbonised fuel stream generated by the OTU is less than that available from burning the hydrocarbon-containing stream(s). This may not be problematic in all cases, but in some cases supplementary fuel is needed to compensated for the shortfall. The supplementary fuel is typically a natural gas stream. Where supplementary fuel is added, this is usually combined with the off-gas stream(s) prior to the ATR. If necessary, the supplementary fuel may be treated in a purification unit, e.g. to remove metal(s), sulfur compounds and/or halide compounds, prior to the ATR.

Depending on the composition of the off-gas stream(s), it may be necessary to carry out a purification step prior to introducing said off-gas stream(s) into the OTU. Purification may include for instance sulfur removal, CO₂ removal and/or H₂ removal. Removal of CO₂ and/or H₂ is preferred to avoid over-sizing the OTU.

Depending on the composition of the off-gas stream(s), and the composition of any supplemental fuel used, it may be necessary to carry out a pre-reforming step upstream of the ATR. Pre-reforming is well known to those skilled in the art.

Steam is added upstream of the ATR. The mixture at the inlet of the ATR, derived from said off-gases and any supplemental fuel (e.g. by combining the hydrocarbon-containing off gas stream(s), steam and any supplemental fuel), is referred to herein as the hydrocarbon-containing fuel stream. The composition of the hydrocarbon-containing fuel stream at the inlet to the ATR has a steam to carbon ratio, defined as the ratio of steam to carbon atoms present as hydrocarbon, which is typically around 2.6 : 1. For the avoidance of doubt, a feed containing 75 mol% H₂O and 25 mol% CH₄ has a steam to carbon ratio of 3.0 : 1, a feed containing 75 mol% H₂O, 10 mol% CO and 15 mol% CH₄ has a steam to carbon ratio of 5.0 : 1 and so on. A steam to carbon ratio of at least 2.0 : 1 is required to theoretically convert all of the carbon present in hydrocarbons into CO₂ and H₂. Steam to carbon ratios below 2.0 : 1 may be used if additional steam is added between the ATR and WGS section and/or if the OTU is operated with a recycle of hydrocarbon-containing gas to the ATR (e.g. generated by a H₂ purification unit located downstream from the CO₂ removal unit). Steam to carbon ratios above 2.0 to 1 may be beneficial to ensure that sufficient steam is present for complete conversion of hydrocarbons in the feed. Because of the energy cost of raising steam it is preferred that the steam to carbon ratio is not more than 3.5 : 1. It is preferred that the steam to carbon ratio at the inlet to the ATR is from 0.5 : 1 to 3.5 : 1, such as 1.0 : 1 to 3.0 : 1.

In embodiments where the off-gas stream has a high CO content it is preferred that the CO is removed prior to reforming in the OTU in order to reduce the size and throughput of the OTU. This may be achieved by treating the off-gas stream in a WGS unit located outside of the OTU. Alternatively, instead of introducing a separate WGS unit to treat the off-gas stream, the off-gas stream may instead be introduced to the OTU downstream of the ATR and upstream of WGS section. If the WGS section includes two or more WGS units (e.g. high temperature shift, medium temperature shift), the off-gas stream may be introduced between one or more of the WGS units. In this arrangement, the decarbonised fuel stream generated by the CO₂ removal unit will also include hydrocarbons from the off-gas stream. It is therefore necessary in this embodiment to introduce a H₂ purification unit downstream from the CO₂ removal unit to separate the decarbonised fuel stream into a H₂ rich stream and a H₂ lean stream. The H₂ lean stream which is rich in hydrocarbons is used to generate the hydrocarbon-containing fuel stream for the ATR. The H₂ rich stream is combusted as fuel instead of the off-gas. This arrangement is shown in Figure 2.

In embodiments where the off-gas stream has a high CO₂ content it is preferred that the CO₂ is removed prior to reforming in the OTU in order to reduce the size and throughput of the OTU. This may be achieved by treating the off-gas stream in a CO₂ removal unit located outside of the OTU. Alternatively, instead of introducing a separate CO₂ removal unit to treat the off-gas stream, the off-gas stream may instead be introduced to the OTU downstream of the WGS section and upstream of CO₂ removal unit. In this arrangement, the decarbonised fuel stream generated by the CO₂ removal unit will also include hydrocarbons from the off-gas stream. It is therefore necessary in this embodiment to introduce a H₂ purification unit downstream from the CO₂ removal unit to separate the decarbonised fuel stream into a H₂ rich stream and a H₂ lean stream. The H₂ lean stream which is rich in hydrocarbons is used to generate the hydrocarbon-containing fuel stream for the ATR. The H₂ rich stream is combusted as fuel instead of the off-gas.

In embodiments where the off-gas stream has a high H₂ content it is preferred that the H₂ is removed prior to reforming in the OTU in order to reduce the size and throughput of the OTU. This may be achieved by treating the off-gas stream in a H₂ purification unit located outside of the OTU. Alternatively, instead of introducing a separate H₂ purification unit to treat the off-gas stream, the off-gas stream may instead be introduced to the OTU downstream of the CO₂ removal unit and upstream of a H₂ purification unit. The H₂ purification unit generates a H₂ rich stream and a H₂ lean stream. The H₂ lean stream which is rich in hydrocarbons is used to generate the hydrocarbon-containing fuel stream for the ATR. The H₂ rich stream is combusted as fuel instead of the off-gas.

In general, where the OTU includes a H₂ purification unit downstream from the CO₂ removal unit which separates the decarbonised fuel stream into a H₂ rich stream and a H₂ lean stream, the H₂ rich stream is combusted as fuel instead of the decarbonised fuel stream.

### Autothermal reformer (ATR)

The skilled person will be familiar with the design of autothermal reformers and detail of their arrangement and suitable catalysts are summarised in WO2022/003312A1. An ATR generally comprises a burner disposed at the top of the reformer, to which the hydrocarbon-containing fuel stream and an oxygen-containing gas are fed, a combustion zone beneath the burner through which a flame extends, and a fixed bed of particulate steam reforming catalyst disposed below the combustion zone. In autothermal reforming, the heat for the endothermic steam reforming reactions is therefore provided by combustion of a portion of hydrocarbon in the hydrocarbon-containing fuel stream. The hydrocarbon-containing fuel stream is typically fed to the top of the reformer and the oxygen-containing gas fed to the burner, mixing and combustion occur downstream of the burner generating a heated gas mixture the composition of which is brought to equilibrium as it passes through the steam reforming catalyst.

The role of the ATR is to convert hydrocarbons in the hydrocarbon-containing fuel stream into hydrogen and carbon oxides through steam reforming reactions.

In a preferred embodiment the WGS section includes a high-temperature shift vessel and the off-gas treatment unit is arranged such that the hydrocarbon-containing feed to the gas-heated reformer is pre-heated by heat exchange with a shifted gas stream generated by the high-temperature shift vessel. High-temperature shift is operated adiabatically in a shift vessel with inlet temperature in the range 300-400°C, preferably 320-360°C, typically over a bed of a reduced iron catalyst, such as chromia-promoted magnetite. Alternatively, a promoted zinc-aluminate catalyst may be used. This arrangement reduces or eliminates the need for additional fuel to pre-heat the hydrocarbon-containing fuel stream. In a preferred embodiment the shifted gases from the high-temperature shift vessel provide all of the heating duty for the hydrocarbon-containing fuel stream.

The stream exiting the ATR is referred to herein as a reformed gas stream.

### Water-gas shift (WGS) section

The reformed gas stream is typically cooled before being fed to the WGS section . The WGS section includes one or more WGS shift stages and may include stages of high-temperature shift, medium-temperature shift, isothermal shift and low-temperature shift. These terms, as well as suitable catalysts therefor, are described in WO2022/003312A1.

The stream exiting the WGS unit is referred to as a shifted gas stream and ideally comprises CO₂, H₂, with the residual being steam and inert gases. A small amount of unreacted hydrocarbons may remain.

It is preferred that steam or water removal is carried out on the shifted stream before it is sent to the CO₂ removal unit. Typically the shifted stream is cooled to a temperature below the dew point so that the steam condenses. Suitable techniques for steam removal are described in WO2022/003312A1.

### CO₂ removal unit

The role of the CO₂ removal unit is to separate the shifted stream into a CO₂ rich stream and a decarbonised fuel stream. Any suitable CO₂ separation technology may be used and the skilled person will be aware of suitable technologies. Examples include physical wash systems, reactive wash systems (e.g. an amine wash system) and cryogenic systems.

The CO₂ rich stream may be further purified if CO₂ is a desired product or may be sent for carbon capture and storage or utilisation. An example of utilisation is in the manufacture of methanol.

The decarbonised fuel stream is used as fuel in the chemical plant. Whilst the decarbonised fuel stream should not contain significant amounts of hydrocarbons, CO or CO₂ (to avoid emitting CO₂ to atmosphere), because the decarbonised fuel stream is intended for use as fuel it does not need to be especially pure and may include inerts. Typically the decarbonised fuel stream contains 50-98 vol% H₂, preferably 60-98 vol% H₂, such as 85-98 vol% H₂.

### Retrofit method

The above sections describe the arrangement of a chemical plant containing an OTU according to the invention. The retrofit method involves installing an OTU arranged as described above, such that a hydrocarbon-containing off-gas stream which was originally combusted to provide at least some of the heating duty on the chemical plant, is instead sent to the OTU and the decarbonised fuel stream generated by the OTU is combusted instead of the hydrocarbon-containing off-gas stream. For example, the decarbonised fuel stream may be used as fuel in a burner, e.g. to produce steam. It will be appreciated that the original burner may need to be replaced to be suitable for burning the decarbonised fuel stream having a high H₂ content and the method may include installation of H₂ fuel burners for the decarbonised fuel stream, and any other necessary modifications.

In some embodiments the off-gas stream is a hydrocarbon-containing stream from a purification unit which is a component of a steam reforming section comprising a steam methane reformer (e.g. in a hydrogen, methanol or ammonia plant). In these embodiments the decarbonised fuel stream generated by the OTU may be used as fuel for the steam methane reformer.

### Example

The process of Figure 1 was modelled based on an off-gas feed, with supplemental natural gas feed, to illustrate the production of a decarbonised fuel. The results for Figure 1 are as follows:

| Stream in Fig. 1 | **101** | **121** | **106** | **107** | **109** | **115** | **117** | **118** |
|---|---|---|---|---|---|---|---|---|
| Temperature (°C) | 33 | 20 | 420 | 363 | 342 | 65 | 45 | 40 |
| Pressure (bara) | 1.3 | 50.0 | 26.1 | 37.4 | 23.5 | 19.6 | 150 | 5.0 |
| Mass flow (ton/h) | 60.7 | 6.16 | 41.8 | 123.7 | 55.3 | 44.5 | 84.3 | 6.6 |
| Composition (mol%) | | | | | | | | |
| O₂ | - | - | - | 95.0 | - | - | - | - |
| H₂O | 0.75 | - | 47.5 | - | 23.7 | 1.37 | 0.01 | 0.39 |
| Hz | 23.7 | - | 19.4 | - | 51.81 | 69.45 | 0.34 | 96.5 |
| CO | 14.5 | - | 11.8 | - | 7.11 | 0.71 | 0.04 | 0.99 |
| CO₂ | 51.0 | 2.00 | 0.45 | - | 16.12 | 27.0 | 99.6 | - |
| N₂ | 0.62 | 0.89 | 0.62 | 0.9 | 0.53 | 0.63 | - | 0.87 |
| Ar | - | - | - | 4.1 | 0.45 | 0.54 | - | 0.75 |
| CH₄ | 9.45 | 89.0 | 19.3 | - | 0.29 | 0.34 | 0.06 | 0.50 |
| C₂H₆ | - | 7.00 | 0.92 | - | - | - | - | - |
| C₃H₈ | - | 1.00 | 0.13 | - | - | - | - | - |
| C₄H₁₀ | - | 0.10 | 0.01 | - | - | - | - | - |
| C₅H₁₂ | - | 0.01 | - | - | - | - | - | - |
| | | | | | | | | |
| H₂S (mg/Nm³) | - | 5 | - | - | - | - | - | - |

The above example illustrates a situation whereby 69.5 te/h of CO₂ equivalent in the off-gas are reduced to 1.5 te/h of CO₂ equivalent in the decarbonised fuel product, via a process where 98% of the CO₂ is captured for sequestration. Typical CO₂ reduction via capture for sequestration is 95%, with ranges of 90 to 99%.

## Claims

1. A method for retrofitting a chemical plant which is initially arranged such that a hydrocarbon-containing off-gas stream is combusted to provide at least some of the heating duty on the chemical plant, the method comprising the step of:
installing an off-gas treatment unit arranged to accept said hydrocarbon-containing off-gas stream, the off-gas treatment unit comprising sequentially:
(i) an autothermal reformer, arranged to accept a hydrocarbon-containing fuel stream comprising hydrocarbons and steam and produce a reformed gas stream;
(ii) a water-gas shift section arranged to accept said reformed gas stream and produce a shifted gas stream; and
(iii) a CO₂ removal unit arranged to accept said shifted gas stream and produce a CO₂ rich stream and a decarbonised fuel stream;
wherein said hydrocarbon-containing fuel stream is derived from said hydrocarbon-containing off-gas stream, steam and any supplemental fuel;
wherein said off-gas treatment unit is arranged such that the decarbonised fuel stream, optionally having first undergone further purification, is combusted instead of the hydrocarbon-containing off-gas stream;
with the proviso that the hydrocarbon-containing off-gas stream is not a purge gas stream from a methanol loop; and
with the proviso that if the hydrocarbon-containing off-gas stream is a tail-gas stream from the purification unit of a hydrocarbon reforming section comprising a fired steam reformer, water-gas shift and purification unit, then the decarbonised fuel stream from the off-gas treatment unit is not sent to the fired steam reformer of the hydrocarbon reforming section as a fuel.

2. A method according to claim 1, wherein the off-gas treatment unit is arranged to accept off-gases from two or more different hydrocarbon-containing off-gas streams from the chemical plant.

3. A method according to claim 1 or claim 2, wherein the hydrocarbon-containing off-gas stream is a hydrocarbon-containing stream from a purification unit.

4. A method according to claim 3, wherein the purification unit is part of a steam reforming section of a hydrogen, methanol or ammonia plant.

5. A method according to any of claims 1 to 4, wherein the water-gas shift section comprises a high-temperature shift vessel and the off-gas treatment unit is arranged such that the hydrocarbon-containing feed to the autothermal reformer is pre-heated by heat exchange with a shifted gas stream generated by the high-temperature shift vessel.

6. A method according to any of claims 1 to 5, wherein the off-gas treatment unit comprises a pre-reformer upstream of the autothermal reformer.

7. A chemical plant comprising an off-gas treatment unit arranged to accept a hydrocarbon-containing off-gas stream, the off-gas treatment unit comprising sequentially:
(i) an autothermal reformer, arranged to accept a hydrocarbon-containing fuel stream comprising hydrocarbons and steam and produce a reformed gas stream;
(ii) a water-gas shift section arranged to accept said reformed gas stream and produce a shifted gas stream; and
(iii) a CO₂ removal unit arranged to accept said shifted gas stream and produce a CO₂ rich stream and a decarbonised fuel stream;
wherein said hydrocarbon-containing fuel stream is derived from said hydrocarbon-containing off-gas stream, steam and any supplemental fuel;
wherein the chemical plant is arranged such that the decarbonised fuel stream, optionally having first undergone further purification, is combusted to provide at least some of the heating duty on the chemical plant;
with the proviso that the hydrocarbon-containing off-gas stream is not a purge gas stream from a methanol loop; and
with the proviso that if the hydrocarbon-containing off-gas stream is a tail-gas stream from the purification unit of a hydrocarbon reforming section comprising a fired steam reformer, water-gas shift and purification unit, then the decarbonised fuel stream from the off-gas treatment unit is not sent to the fired steam reformer of the hydrocarbon reforming section as a fuel.

8. A chemical plant according to claim 7, wherein the off-gas treatment unit is arranged to accept off-gases from two or more different hydrocarbon-containing off-gas streams from the chemical plant.

9. A chemical plant according to claim 8, wherein the two or more different hydrocarbon-containing off-gas streams are combined into a single stream prior to entering the autothermal reformer.

10. A chemical plant according to any of claims 7 to 9, wherein the hydrocarbon-containing off-gas stream is a purge stream.

11. A chemical plant according to any of claims 7 to 9, wherein the hydrocarbon-containing off-gas stream is a hydrocarbon-containing stream from a purification unit which is part of the steam reforming section of a hydrogen, methanol or ammonia plant.

12. A chemical plant according to any of claims 7 to 11, wherein the water-gas shift section comprises a high-temperature shift vessel and the off-gas treatment unit is arranged such that the hydrocarbon-containing feed to the autothermal reformer is pre-heated by heat exchange with a shifted gas stream generated by the high-temperature shift vessel.

13. A chemical plant according to any of claims 7 to 12, wherein the off-gas treatment unit comprises a pre-reformer upstream of the autothermal reformer.

14. A process of treating a hydrocarbon-containing off-gas stream from a chemical plant by converting said hydrocarbon-containing off-gas stream in an off-gas treatment unit to produce a decarbonised fuel stream and combusting said decarbonised fuel stream to provide at least some of the heating duty on said chemical plant, wherein the chemical plant is as defined in any of claims 7 to 13.

15. A process according to claim 14, wherein said decarbonised fuel stream comprises 50-98 vol% H₂.

## Patentansprüche

1. Verfahren zum Nachrüsten einer chemischen Anlage, die anfänglich derart eingerichtet ist, dass ein kohlenwasserstoffhaltiger Abgasstrom verbrannt wird, um mindestens einen Anteil der Heizleistung in der chemischen Anlage bereitzustellen, das Verfahren umfassend den Schritt:
Installieren einer Abgasbehandlungseinheit, die eingerichtet ist, um den kohlenwasserstoffhaltigen Abgasstrom aufzunehmen, die Abgasbehandlungseinheit der Reihe nach umfassend:
(i) einen autothermen Reformer, der eingerichtet ist, um einen kohlenwasserstoffhaltigen Brennstoffstrom, umfassend Kohlenwasserstoffe und Dampf, aufzunehmen und einen reformierten Gasstrom zu produzieren;
(ii) einen Wassergaskonvertierungsabschnitt, der eingerichtet ist, um den Reformgasstrom aufzunehmen und einen konvertierten Gasstrom zu produzieren; und
(iii) eine CO₂-Entfernungseinheit, die eingerichtet ist, um den konvertierten Gasstrom aufzunehmen und einen CO₂-reichen Strom und einen dekarbonisierten Brennstoffstrom zu produzieren;
wobei der kohlenwasserstoffhaltige Brennstoffstrom aus dem kohlenwasserstoffhaltigen Abgasstrom, Dampf und beliebigem zusätzlichem Brennstoff abgeleitet ist;
wobei die Abgasbehandlungseinheit derart eingerichtet ist, dass der dekarbonisierte Brennstoffstrom, der optional zunächst einer weiteren Reinigung unterzogen wurde, anstelle des kohlenwasserstoffhaltigen Abgasstroms verbrannt wird;
mit der Maßgabe, dass der kohlenwasserstoffhaltige Abgasstrom kein Spülgasstrom aus einem Methanolkreislauf ist; und
mit der Maßgabe, dass, falls der kohlenwasserstoffhaltige Abgasstrom ein Endgasstrom aus der Reinigungseinheit eines Kohlenwasserstoffreformierungsabschnitts ist, umfassend einen aktivierten Dampfreformer, eine Wassergaskonvertierungs- und Reinigungseinheit, dann der dekarbonisierte Brennstoffstrom aus der Abgasbehandlungseinheit nicht als ein Brennstoff zu dem aktivierten Dampfreformer des Kohlenwasserstoffreformierungsabschnitts geleitet wird.

2. Verfahren nach Anspruch 1, wobei die Abgasbehandlungseinheit eingerichtet ist, um Abgase aus zwei oder mehr verschiedenen kohlenwasserstoffhaltigen Abgasströmen aus der chemischen Anlage aufzunehmen.

3. Verfahren nach Anspruch 1 oder 2, wobei der kohlenwasserstoffhaltige Abgasstrom ein kohlenwasserstoffhaltiger Strom aus einer Reinigungseinheit ist.

4. Verfahren nach Anspruch 3, wobei die Reinigungseinheit Teil eines Dampfreformierungsabschnitts einer Wasserstoff-, Methanol- oder Ammoniakanlage ist.

5. Verfahren nach einem der Ansprüche 1 bis 4, wobei der Wassergaskonvertierungsabschnitt ein Hochtemperaturkonvertierungsgefäß umfasst und die Abgasbehandlungseinheit derart eingerichtet ist, dass der kohlenwasserstoffhaltige Einsatz für den autothermen Reformer durch Wärmeaustausch mit einem konvertierten Gasstrom vorerhitzt wird, der durch das Hochtemperaturkonvertierungsgefäß erzeugt wird.

6. Verfahren nach einem der Ansprüche 1 bis 5, wobei die Abgasbehandlungseinheit einen Vorreformer stromaufwärts des autothermen Reformers umfasst.

7. Chemische Anlage, umfassend eine Abgasbehandlungseinheit, die eingerichtet ist, um einen kohlenwasserstoffhaltigen Abgasstrom aufzunehmen, die Abgasbehandlungseinheit der Reihe nach umfassend:
(i) einen autothermen Reformer, der eingerichtet ist, um einen kohlenwasserstoffhaltigen Brennstoffstrom, umfassend Kohlenwasserstoffe und Dampf, aufzunehmen und einen reformierten Gasstrom zu produzieren;
(ii) einen Wassergaskonvertierungsabschnitt, der eingerichtet ist, um den Reformgasstrom aufzunehmen und einen konvertierten Gasstrom zu produzieren; und
(iii) eine CO₂-Entfernungseinheit, die eingerichtet ist, um den konvertierten Gasstrom aufzunehmen und einen CO₂-reichen Strom und einen dekarbonisierten Brennstoffstrom zu produzieren;
wobei der kohlenwasserstoffhaltige Brennstoffstrom aus dem kohlenwasserstoffhaltigen Abgasstrom, Dampf und beliebigem zusätzlichem Brennstoff abgeleitet ist;
wobei die chemische Anlage derart eingerichtet ist, dass der dekarbonisierte Brennstoffstrom, der optional zunächst einer weiteren Reinigung unterzogen wurde, verbrannt wird, um mindestens einen Anteil der Heizleistung der chemischen Anlage bereitzustellen;
mit der Maßgabe, dass der kohlenwasserstoffhaltige Abgasstrom kein Spülgasstrom aus einem Methanolkreislauf ist; und
mit der Maßgabe, dass, falls der kohlenwasserstoffhaltige Abgasstrom ein Endgasstrom aus der Reinigungseinheit eines Kohlenwasserstoffreformierungsabschnitts ist, umfassend einen aktivierten Dampfreformer, eine Wassergaskonvertierungs- und Reinigungseinheit, dann der dekarbonisierte Brennstoffstrom aus der Abgasbehandlungseinheit nicht als ein Brennstoff zu dem aktivierten Dampfreformer des Kohlenwasserstoffreformierungsabschnitts geleitet wird.

8. Chemische Anlage nach Anspruch 7, wobei die Abgasbehandlungseinheit eingerichtet ist, um Abgase aus zwei oder mehr verschiedenen kohlenwasserstoffhaltigen Abgasströmen aus der chemischen Anlage aufzunehmen.

9. Chemische Anlage nach Anspruch 8, wobei die zwei oder mehr verschiedenen kohlenwasserstoffhaltigen Abgasströme vor einem Eintreten in den autothermen Reformer zu einem einzigen Strom zusammengeführt werden.

10. Chemische Anlage nach einem der Ansprüche 7 bis 9, wobei der kohlenwasserstoffhaltige Abgasstrom ein Spülstrom ist.

11. Chemische Anlage nach einem der Ansprüche 7 bis 9, wobei der kohlenwasserstoffhaltige Abgasstrom ein kohlenwasserstoffhaltiger Strom aus einer Reinigungseinheit ist, die Teil des Dampfreformierungsabschnitts einer Wasserstoff-, Methanol- oder Ammoniakanlage ist.

12. Chemische Anlage nach einem der Ansprüche 7 bis 11, wobei der Wassergaskonvertierungsabschnitt ein Hochtemperaturkonvertierungsgefäß umfasst und die Abgasbehandlungseinheit derart eingerichtet ist, dass der kohlenwasserstoffhaltige Einsatz für den autothermen Reformer durch Wärmeaustausch mit einem konvertierten Gasstrom vorerhitzt wird, der durch das Hochtemperaturkonvertierungsgefäß erzeugt wird.

13. Chemische Anlage nach einem der Ansprüche 7 bis 12, wobei die Abgasbehandlungseinheit einen Vorreformer stromaufwärts des autothermen Reformers umfasst.

14. Prozess zum Behandeln eines kohlenwasserstoffhaltigen Abgasstroms aus einer chemischen Anlage durch Umwandeln des kohlenwasserstoffhaltigen Abgasstroms in einer Abgasbehandlungseinheit, um einen dekarbonisierten Brennstoffstrom zu produzieren, und Verbrennen des dekarbonisierten Brennstoffstroms, um mindestens einen Anteil der Heizleistung in der chemischen Anlage bereitzustellen, wobei die chemische Anlage wie in einem der Ansprüche 7 bis 13 definiert ist.

15. Prozess nach Anspruch 14, wobei der dekarbonisierte Brennstoffstrom 50-98 Vol.-% H₂ umfasst.

## Revendications

1. Procédé permettant de modifier ultérieurement une installation chimique qui est initialement agencée de telle sorte qu'un courant d'effluent gazeux chargé en hydrocarbures est brûlé pour fournir au moins une partie des besoins en chauffage de l'installation chimique, le procédé comprenant l'étape consistant à :
installer une unité de traitement d'effluent gazeux agencée pour accepter ledit courant d'effluent gazeux chargé en hydrocarbures, l'unité de traitement d'effluent gazeux comprenant séquentiellement :
(i) un reformeur autothermique, agencé pour accepter un courant de combustible chargé en hydrocarbures comprenant des hydrocarbures et de la vapeur et produire un courant de gaz reformé ;
(ii) une section de conversion eau-gaz agencée pour accepter ledit courant de gaz reformé et produire un courant gazeux converti ; et
(iii) une unité de retrait de CO₂ agencée pour accepter ledit courant gazeux converti et produire un courant riche en CO₂ et un courant de combustible décarboné ;
dans lequel ledit courant de combustible chargé en hydrocarbures est dérivé dudit courant d'effluent gazeux chargé en hydrocarbures, de vapeur et de l'un quelconque combustible complémentaire ;
dans lequel ladite unité de traitement d'effluent gazeux est agencée de telle sorte que le courant de combustible décarboné, ayant facultativement subi d'abord une purification supplémentaire, est brûlé à la place du courant d'effluent gazeux chargé en hydrocarbures ;
à condition que le courant d'effluent gazeux chargé en hydrocarbures ne soit pas un courant de gaz de purge provenant d'une boucle de méthanol ; et
à condition que si le courant d'effluent gazeux chargé en hydrocarbures est un courant de gaz résiduaire provenant de l'unité de purification d'une section de reformage d'hydrocarbure comprenant un vaporeformeur à combustion, une unité de conversion eau-gaz et de purification, alors le courant de combustible décarboné provenant de l'unité de traitement d'effluent gazeux ne soit pas envoyé au vaporeformeur à combustion de la section de reformage d'hydrocarbure en tant que combustible.

2. Procédé selon la revendication 1, dans lequel l'unité de traitement d'effluent gazeux est agencée pour accepter des effluents gazeux provenant de deux courants d'effluent gazeux chargés en hydrocarbures différents ou plus provenant de l'installation chimique.

3. Procédé selon la revendication 1 ou la revendication 2, dans lequel le courant d'effluent gazeux chargé en hydrocarbures est un courant chargé en hydrocarbures provenant d'une unité de purification.

4. Procédé selon la revendication 3, dans lequel l'unité de purification fait partie d'une section de vaporeformage d'une installation d'hydrogène, de méthanol ou d'ammoniac.

5. Procédé selon l'une quelconque des revendications 1 à 4, dans lequel la section de conversion eau-gaz comprend un récipient de conversion à température élevée et l'unité de traitement d'effluent gazeux est agencée de telle sorte que l'alimentation chargée en hydrocarbures vers le reformeur autothermique est préchauffée par échange de chaleur avec un courant gazeux converti généré par le récipient de conversion à température élevée.

6. Procédé selon l'une quelconque des revendications 1 à 5, dans lequel l'unité de traitement d'effluent gazeux comprend un pré-reformeur en amont du reformeur autothermique.

7. Installation chimique comprenant une unité de traitement d'effluent gazeux agencée pour accepter un courant d'effluent gazeux chargé en hydrocarbures, l'unité de traitement d'effluent gazeux comprenant séquentiellement :
(i) un reformeur autothermique, agencé pour accepter un courant de combustible chargé en hydrocarbures comprenant des hydrocarbures et de la vapeur et produire un courant de gaz reformé ;
(ii) une section de conversion eau-gaz agencée pour accepter ledit courant de gaz reformé et produire un courant gazeux converti ; et
(iii) une unité de retrait de CO₂ agencée pour accepter ledit courant gazeux converti et produire un courant riche en CO₂ et un courant de combustible décarboné ;
dans lequel ledit courant de combustible chargé en hydrocarbures est dérivé dudit courant d'effluent gazeux chargé en hydrocarbures, de vapeur et de l'un quelconque combustible complémentaire ;
dans lequel l'installation chimique est agencée de telle sorte que le courant de combustible décarboné, ayant facultativement subi d'abord une purification supplémentaire, est brûlé pour fournir au moins une partie des besoins en chauffage de l'installation chimique ;
à condition que le courant d'effluent gazeux chargé en hydrocarbures ne soit pas un courant de gaz de purge provenant d'une boucle de méthanol ; et
à condition que si le courant d'effluent gazeux chargé en hydrocarbures est un courant de gaz résiduaire provenant de l'unité de purification d'une section de reformage d'hydrocarbure comprenant un vaporeformeur à combustion, une unité de conversion eau-gaz et de purification, alors le courant de combustible décarboné provenant de l'unité de traitement d'effluent gazeux ne soit pas envoyé au vaporeformeur à combustion de la section de reformage d'hydrocarbure en tant que combustible.

8. Installation chimique selon la revendication 7, dans laquelle l'unité de traitement d'effluent gazeux est agencée pour accepter des effluents gazeux provenant de deux courants d'effluent gazeux chargés en hydrocarbures différents ou plus provenant de l'installation chimique.

9. Installation chimique selon la revendication 8, dans laquelle les deux courants d'effluent gazeux chargés en hydrocarbures différents ou plus sont combinés en un courant unique avant d'entrer dans le reformeur autothermique.

10. Installation chimique selon l'une quelconque des revendications 7 à 9, dans laquelle le courant d'effluent gazeux chargé en hydrocarbures est un courant de purge.

11. Installation chimique selon l'une quelconque des revendications 7 à 9, dans laquelle le courant d'effluent gazeux chargé en hydrocarbures est un courant chargé en hydrocarbures provenant d'une unité de purification qui fait partie de la section de vaporeformage d'une installation d'hydrogène, de méthanol ou d'ammoniac.

12. Installation chimique selon l'une quelconque des revendications 7 à 11, dans laquelle la section de conversion eau-gaz comprend un récipient de conversion à température élevée et l'unité de traitement d'effluent gazeux est agencée de telle sorte que l'alimentation chargée en hydrocarbures vers le reformeur autothermique est préchauffée par échange de chaleur avec un courant gazeux converti généré par le récipient de conversion à température élevée.

13. Installation chimique selon l'une quelconque des revendications 7 à 12, dans laquelle l'unité de traitement d'effluent gazeux comprend un pré-reformeur en amont du reformeur autothermique.

14. Processus de traitement d'un courant d'effluent gazeux chargé en hydrocarbures provenant d'une installation chimique par conversion dudit courant d'effluent gazeux chargé en hydrocarbures dans une unité de traitement d'effluent gazeux pour produire un courant de combustible décarboné et la combustion dudit courant de combustible décarboné pour fournir au moins une partie des besoins en chauffage de ladite installation chimique, dans lequel l'installation chimique est telle que définie dans l'une quelconque des revendications 7 à 13.

15. Processus selon la revendication 14, dans lequel ledit courant de combustible décarboné comprend 50 à 98 % en vol de H₂.
